# EUROPEAN PATENT APPLICATION

(11) **EP 0 630 854 A1**
(43) Date of publication of application: **28.12.1994**
(21) Application number: 94300236.0
(22) Date of filing: 13.01.1994
(51) Int. Cl.: B66F 11/04, B66C 23/80, B62D 57/028

(54) **A mechanism for moving a vehicle laterally**

(30) Priority: 22.06.1993 JP 174832/93
(71) Applicant: JAPANIC CORPORATION, Ashikaga-shi, Tochigi-ken 326-03 (JP)
(72) Inventor: Kishi, Mitsuhiro, c/o Japanic Corp., Ashikaga-shi, Tochigi-ken 326-03 (JP)
(74) Representative: Kirk, Geoffrey Thomas

(57) **Abstract**

A mechanism for moving a vehicle in a direction perpendicular to the travelling direction by a slide mechanism attached to the vehicle chassis. Laterally movable mechanisms (8, 9) are disposed at front and rear portions of the vehicle chassis (1), and each movable mechanism (8, 9) comprises a pair of lifting means (12, 13) capable of lifting the chassis (1) upward, and a slide means (16, 17) is connected to the lower portion of the lifting means and is capable of moving laterally which contacting the ground.

## Description

The present invention concerns a mechanism for moving a vehicle laterally, or sideways relative to its ordinary direction of travel.

In the case of some types of vehicles for special purposes it is necessary that they can be transported at relatively high speed between job locations and then manoeuvred sideways, in confined spaces, to be closely adjacent the job. Such vehicles may include lifting platforms to allow access to high structures for maintenance and inspection. To manoeuvre conventional wheeled or tracked vehicles to be closely adjacent such a structure is difficult and time consuming. Accordingly, there is a desire to provide a vehicle capable of moving laterally to the normal travelling direction.

A vehicle is known in which the wheels are capable of turning so that all the wheels can move at right angles relative to the normal travelling direction whereby the vehicle can move laterally. There is another known vehicle which can move laterally by virtue of a special push car which is accommodated in the lower portion of the vehicle. However, such vehicles are heavy and their structure complex, so they are not commonly used.

It is an object of the present invention to provide a mechanism for moving a vehicle laterally which alleviates at least one of the aforementioned problems and accordingly the present invention provides a mechanism for moving a vehicle laterally, capable of being mounted on the vehicle and having a lifting means capable of lifting the vehicle up so that the vehicle is supported by the mechanism, said mechanism having a part engageable with the ground and a part for engaging the vehicle, said parts being relatively slidably movable in the lateral direction when the vehicle is supported.

One or preferably both of the parts may be an elongate and rigid member.

By virtue of the mechanism it is possible to lift the vehicle by the lifting means so that the lower portion of the wheels or crawlers can be raised from the ground and thereafter the chassis can be slid laterally. As a result it is possible to move the chassis freely toward the wall of a house or building. When the chassis is not moved laterally, the lifting mechanisms lifts the entire chassis and the mechanism operates like an outrigger while contacting the ground, thereby stabilising the chassis.

The mechanism according to the present invention enables the vehicle to move laterally relative to the normal travelling direction without changing the driving mechanism of the vehicle.

The mechanism can advantageously act as a stabilising outrigger which, unlike the conventional laterally extending outrigger, operates within the lateral width of the vehicle.

The mechanism serves the dual purposes of providing lateral motion and stability above thus obviating the need for the two separate mechanisms conventionally required to provide lateral movement and stability.

It will readily be appreciated that the present invention can be applied to vehicles other than those bearing lifting platforms, e.g., excavators or cranes.

A mechanism for moving a vehicle laterally and constructed in accordance with the present invention, will now be described, by way of example only, with reference to the accompanying drawings, in which:-
Fig. 1 is a perspective view of a vehicle equipped with the mechanism,
Fig. 2 is a view of the front of the vehicle in Fig. 1,
Fig. 3 is a partially sectioned view of the mechanism at the front of the vehicle, viewed from in front and with the vehicle not shown,
Fig. 4, is a side elevation of the mechanism of Fig. 3 as if viewed from the left hand side of the observer,
Fig. 5, is a partially exploded perspective view of the mechanism shown in Fig. 3.
Figs. 6(A) and 6(B) are views of the mechanism of Fig. 3, from the front, Fig. 6(A) showing the mechanism at rest or centred and Fig. 6(B) shows the mechanism shunted to the right of the observer.

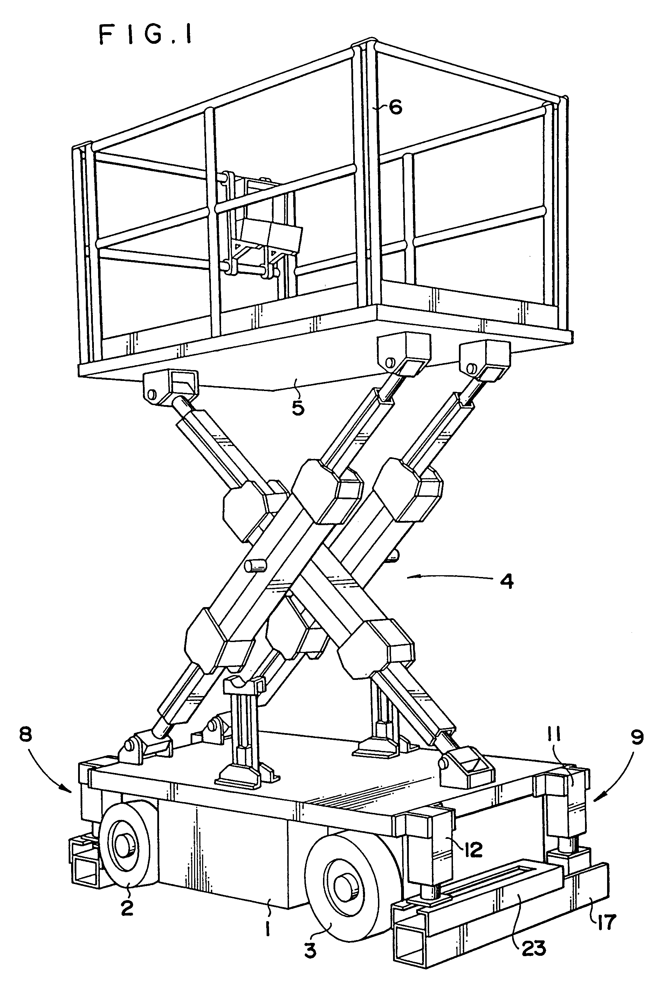

The vehicle described is provided with an X-shaped lifting mechanism capable of moving a platform up and down. As shown in figure 1 a vehicle chassis 1 is supported by a pair of front wheels 2 and a pair of rear wheels 3 at left and right sides thereof. The chassis 1 also accommodates equipment such as a hydraulic pressure generating source, etc.. The front wheels 2 can be steered in a left or right direction by a steering mechanism, so that the chassis can be steered when the vehicle moves. The rear wheels may be connected, to a drive motor (not shown) which in the example is hydraulic. When the rear wheels 3 are driven by the hydraulic motor, the chassis 1 is moved.

A lifting mechanism 4 is mounted on the chassis and comprises a plurality of booms arranged to have an X-shape as viewed from the side. Each boom is extensible, in this case telescopically extensible. A platform 5 is mounted on the upper ends of the booms of the lifting mechanism 4, the upper ends of the booms engaging the lower surface of the platform. A handrail 6 is fixed to the platform 5 at the upper peripheral surface thereof so as to prevent an operator from falling.

A pair of mechanisms 8,9 for moving the vehicle laterally are each attached to the chassis 1, one at the front and the other at the rear end thereof. The mechanisms 8 and 9 can lift the chassis 1 and move the chassis 1 laterally, whereby the vehicle is movable laterally (i.e., at right angles to the long distance travelling direction of the chassis 1).

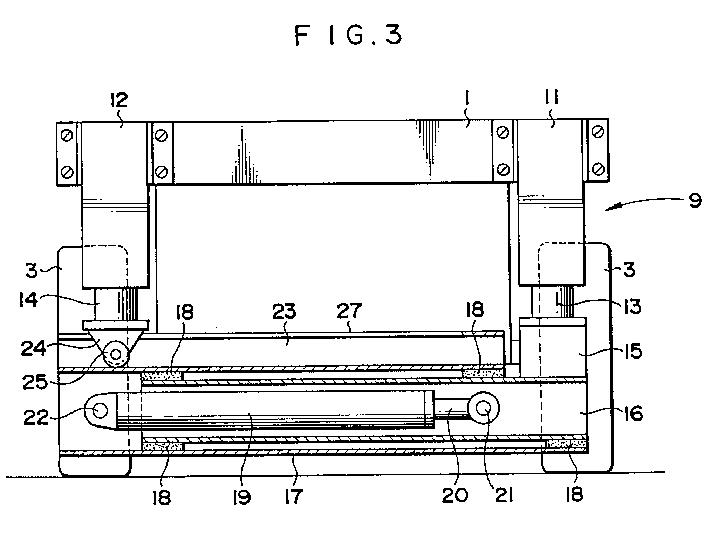

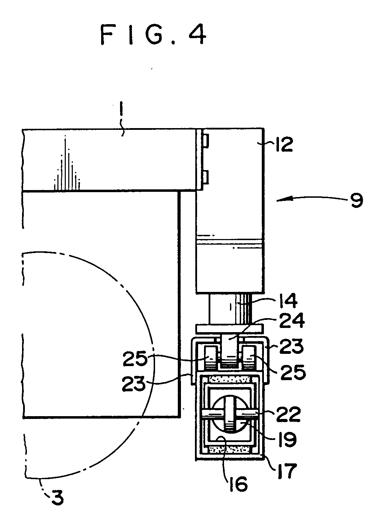

Figure 3 shows the internal structure of the part 9 of the mechanism. Although the structure of the movable mechanism 9 is explained with reference to Figs 3, 4 and 5, the explanation of the movable mechanism 8 is omitted since the structure and operation of the movable mechanism 8 is the same as that of the movable mechanism 9.

A pair of leg covers 11 and 12 are fixed to the rear end of the chassis 1 at right and left sides thereof with a space 8 therebetween. The leg covers 11 and 12 are tubular and square in cross-section and formed by bending a steel sheet. The leg covers 11 and 12 are fixed to the chassis 1 so that their axis are vertical. Hydraulic cylinders (not shown) are accommodated, one each in each of the leg covers 11 and 12 and are extensible vertically. Extensible legs 13 and 14 project downwardly from lower openings in the leg covers 11 and 12 and are connected to the hydraulic cylinders so as to be vertically extendible.

The lower end of the leg 13 is fixed to the upper surface of a connecting block 15A which connects the leg 13 with one end of a fixed tubular element 16. The fixed element 16 is square in cross-section and may be formed by bending a steel sheet. The fixed element 16 is elongate and disposed with its long axis horizontal and in the sideways direction (i.e., perpendicular to the travelling direction). The extensible leg 13, connecting block 15, and fixed element 16 have an L-shape configuration as viewed from the rear of the vehicle.

A tubular, elongate, movable element 17 accommodates the fixed element 16 to be telescopically extensible on the fixed element 16 in the sideways direction.The movable element 17 is also square in cross-section and may be formed by bending a steel sheet. The inner cross-section of the movable tube 17 is greater than the outer cross-section of the fixed element 16 so that they form a telescopic structure capable of moving telescopically. A plurality of sliders 18 made of a sliding bearing material such as an MC nylon are interposed between the outer wall of the fixed element 16 and the inner wall of the movable element 17 whereby the movable element 17 is smoothly slidable relative to the fixed element 16.

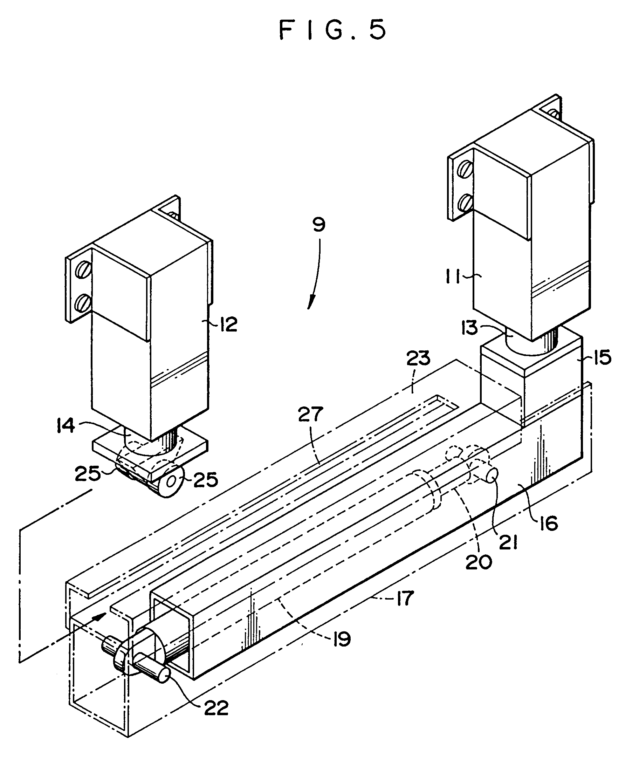

The fixed element 16 is open at both ends, and accommodates an hydraulic cylinder 19 disposed to be extensible in the sideways direction (i.e., the longitudinal direction of the fixed element 16). A movable cylinder rod 20 is coupled to and projects from one end of the hydraulic cylinder 19. The cylinder rod 20 is coupled at the free end thereof to the fixed element 16 by a pin 21, while the base or remote end of the hydraulic cylinder 19 is coupled to the movable element 17 by a pin 22 which is disposed adjacent the free end of the movable element 17 remote from the pin 21. A channel-shaped guide chassis 23 having a downwardly-directed U-shaped cross-section is fixed to the upper surface of the movable element 17. A space which is square in cross-section is formed between the inner surface of the channel-shaped guide chassis 23 and the upper surface of the movable element 17. An elongate guide groove 27 is formed through and longitudinally along the upper wall of the channel-shaped guide chassis 23 straight from one end in the longitudinal direction thereof (left end in Figs. 3 and 5).

A triangular roller receiver 24 is fixed to the lower end of the extensible leg 14 and has a projection at the lower portion thereof which is directed downward. A pair of rollers 25 are rotatably supported by the roller receiver 24 at the right and left sides thereof. The rollers 25 are positioned within the space formed between the channel-shaped guide chassis 23 and the movable element 17, while the roller receiver 24 projects through the guide groove 27. Accordingly, the rollers 25 are longitudinally movable between the upper surface of the movable element 17 and the inner surface of the channel-shaped guide chassis 23 in the longitudinal direction, but they cannot move vertically. The rollers 25 maintain the vertical position of the channel-shaped guide chassis 23 and the movable element 17, and assure only horizontal movement of the channel-shaped guide chassis 23 and movable element 17.

In operation, an engine (not shown) accommodated in the chassis 1 drives a hydraulic pressure generating source. The hydraulic motor (not shown) which is driven by the hydraulic pressure drives the rear wheels 3 and at the same time front wheels 2 are steered, whereby the working machine can be steered in a different direction while moving in the longitudinal direction thereof. Thus, the working machine can move freely on the ground or road and is moved to a given position. Successively, hydraulic cylinders (not shown)accommodated in the lift mechanism 4 are operated to extend the booms of the lifting mechanism 4 so that the platform 5 is lifted up. This operation is the same as that of known machines and hence more detailed explanation is omitted.

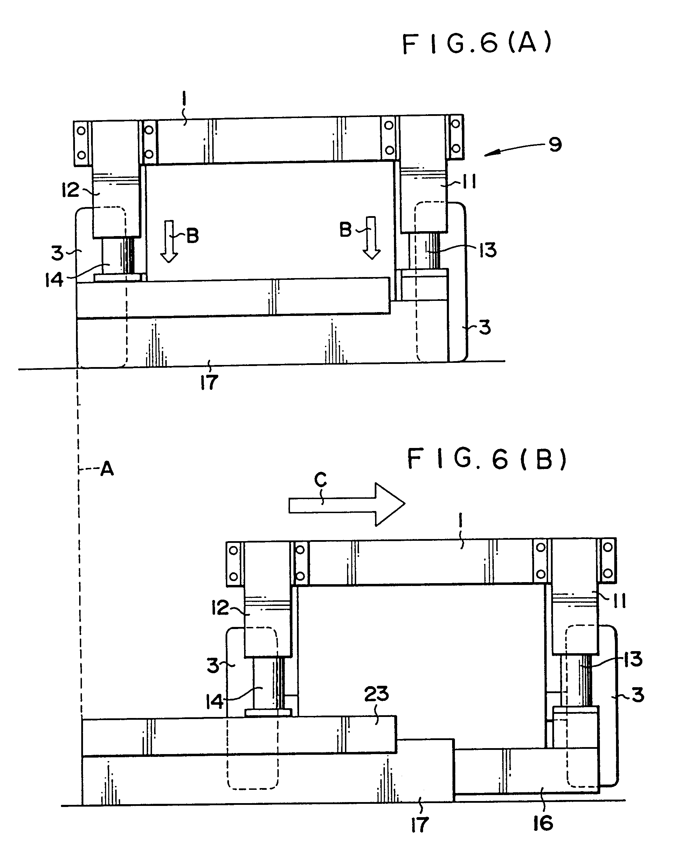

Described hereinafter is the case where the chassis 1 is moved to a given position, especially the case where the chassis 1 is moved laterally as a whole relative to the wall surface of a housing or building after the side surface of the chassis 1 is positioned close to the wall of the house or building and the vehicle is thereafter stopped. The operation will be described with reference to Figs. 6(A) and 6(B).

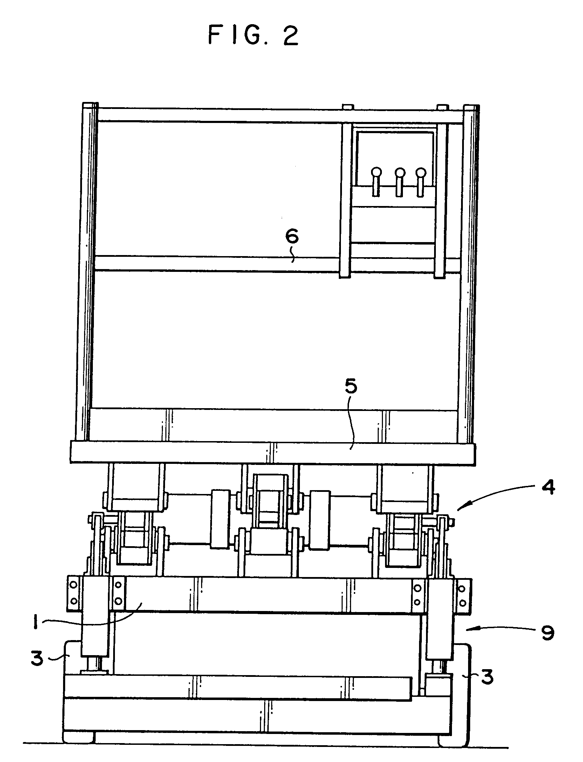

The hydraulic cylinders accommodated in the leg covers 11 and 12 of the front and rear mechanisms 8 and 9 are extended to push the extensible legs 13 and 14 down (Figs. 2, 3 and 4 show the state where the extensible legs 13 and 14 are lifted or retracted so as to be at their maximum height). Since the extensible legs 13 and 14 are pushed in the direction of the arrow B in Fig. 6, the lower surface of the movable element 17 of each mechanism 8 and 9 firmly contacts the ground or road. If the extensible legs 13 and 4 are pushed downward even further, the chassis 1 is lifted up. As a result, the front wheels 2 and the rear wheels 3 are moved up and disengage the ground. Since the chassis is held by the movable tubes 17 when the extensible legs 13 and 14 are pushed downward, the movable tubes 17 operate to stabilise the vehicle like outriggers. In this state, the chassis is supported stably without resorting to the front wheels 2 or rear wheels 3, and the platform 5 does not sway due to vibration or wind even if the lifting mechanism 4 extends, which assures safe working by the operator.

To move the chassis 1 laterally so that the side of the platform 5 approaches, for example, the wall of a building, hydraulic oil is supplied to the hydraulic cylinder 19 of each mechanism so that the cylinder rod 20 is pushed out of the hydraulic cylinder 19. When the cylinder rod 20 extends, the distance between the pins 21 and 22 is increased so that the fixed element 16 is pushed out of the movable element 17, (to the right in Figs. 3 and 6(B)). Since the lower surface of each movable tube 17 contacts the ground or road, the movable element 17 does not move so that the fixed element 16 moves relative to the movable element 17. Accordingly, the fixed element 16 is pushed out of the movable element 17 in Fig. 6(B), this causes the rollers 25 to move along the upper surface of the movable element 17 and the chassis 1 therefore moves in the direction of the arrow C in Fig. 6(B). Since the movable element 17 contacts the ground or road and does not move, the chassis 1, lifting mechanism 4 and platform 5 move laterally relative to the movable element 17. In such a manner, the fixed element 16 is movable smoothly from the movable tube 17 by the sliding operation of each slider 18 when the fixed element 16 and the movable tube 17 relatively extend since the sliders 18 are interposed between the contacting surfaces thereof.

The following operation must be performed to cause the side surface of the platform 5 to approach closer to the wall surface after the movement of the chassis 1 in the direction of the arrow C as illustrated in Fig. 6(B).

The hydraulic cylinders accommodated in the covers 11 and 12 are contracted in the state where the fixed elements 16 are extended from the movable element 17 as illustrated in Fig. 6(B) this causes retraction of the legs 13 and 14 so that the front and rear wheels 2 and 3 again contact the ground or road and subsequently the movable element 17 is lifted from the ground or road. Thereafter, hydraulic oil is extracted from the hydraulic cylinder 19 of each mechanism so that the cylinder rod 20 is pulled inside the hydraulic cylinder 19, this causes the movable element 17 to contract over the fixed element 16. Since the rollers 25 contact and roll on the upper surface of the movable element 17, the extensible leg 4 and the movable element 17 are movable relative to each other by way of the rollers 25. By this operation, the fixed element 16 is again accommodated inside the movable tube 17 so that tubes 16 to 17 are returned to the state illustrated in Figs. 2, 3 and 6(A). However, since the chassis 1 remains in the position as previously moved in the direction of the arrow C from the reference line A, the fixed element 16 is now telescopically contracted in the movable element 17 at the new position to which the chassis 1 was previously laterally moved.

Thereafter, the hydraulic cylinders accommodated in the leg covers 11 and 12 are extended to push the extensible legs 13 and 14 down whereby th the chassis 1 is fixed to the ground or road by the movable elements 17. The hydraulic cylinders 19 are operated to extend the fixed elements 16 from the movable elements 17 so that the chassis 1 is moved further in the direction of the arrow C. With the repetition of these operations, the chassis 1 performs a motion like the sideways crawl of a crab.

## Claims

**1.** A mechanism (8,9) for moving a vehicle laterally, capable of being mounted on the vehicle and having a lifting means capable of lifting the vehicle up so that the vehicle is supported by the mechanism, said mechanism having a part engageable with the ground and a part for engaging the vehicle, said parts being relatively slidably movable in the lateral direction.

**2.** A mechanism according to claim 1, wherein the lifting means is interposed between the vehicle and said parts.

**3.** A mechanism according to claim 1 or claim 2 wherein the lifting means comprises at least one hydraulic cylinder.

**4.** A mechanism according to any one of claims 1 to 3 wherein the ground engageable part is provided by an elongate tubular movable element (17) extending in the lateral direction and the vehicle engageable part is provided by an elongate fixed element (16) which is telescopically received into the movable element (17) so that the vehicle is moved laterally when the fixed element (16) is extended from the movable element (17) and the movable element (17) engages the ground.

**5.** A mechanism according to claim 4 wherein a first hydraulic cylinder fixedly engages an end of the fixed element (16) and a second hydraulic cylinder of the lifting means is supported by rollers (25) movable in a channel shaped guide chassis (23) fixed to the upper surface of the movable element (17).

**6.** A mechanism according to claim 4 or claim 5 wherein the fixed element (16) is extensible from the movable element by the action of a rod (20) extensible from an hydraulic cylinder (19) accommodated in the fixed element (16) and the movable element (17).

**7.** A mechanism for moving a vehicle laterally characterised in that movable mechanisms (8, 9) are disposed one each adjacent the front and rear ends of the chassis (1) of the vehicle, each movable mechanism (8, 9) comprising a pair of lifting means (13, 14) capable of lifting the chassis (1) upward and a slide means (16, 17) connected to the lower portion of said lifting means and capable of moving laterally while contacting the ground.

**8.** A mechanism of a vehicle according to claim 7, wherein each of said pair of lifting means includes a pair of leg covers (11, 12) which are fixed to the end of said chassis (1) and extend in an axial direction perpendicular to said chassis (1) and extensible legs (13, 14) which are housed in said pair of leg covers and are extensible downward from said leg covers (11, 12), said extensible legs (13, 14) being connected to said slide means (16, 17) at the other end thereof.

**9.** A mechanism of a vehicle according to claim 7 or claim 8, characterised in that said slide means comprises a fixed slide member (16) disposed substantially horizontally relative to the lateral direction of said chassis (1) and a movable slide member (17) which is movable toward said fixed slide member (16) in the longitudinal direction thereof, whereby said fixed slide member (16) is slidable into said movable slide member (17), and said movable slide member (17) is capable of contacting the ground at the lower surface thereof.

**10** A laterally movable mechanism of a vehicle according to claim 9, wherein the lower end of one stretchable leg (13) is connected to one end of said fixed slide member (16) while the lower end of another stretchable leg (14) is connected to said movable slide member (17) so as to be relatively movable only in the longitudinal direction thereof.
